Europäisches Patentamt

European Patent Office

Office européen des brevets

(19)

(11) EP 1 038 193 B1

(12) FASCICULE DE BREVET EUROPEEN

(45) Date de publication et mention
de la délivrance du brevet:
**10.03.2004  Bulletin 2004/11**

(21) Numéro de dépôt: **98958982.5**

(22) Date de dépôt: **08.12.1998**

(51) Int Cl.⁷: **G02B 1/11**

(86) Numéro de dépôt international:
**PCT/FR1998/002659**

(87) Numéro de publication internationale:
**WO 1999/030188 (17.06.1999 Gazette 1999/24)**

(54) **PROCEDE DE TRAITEMENT ANTIREFLET ET MATERIAU PRESENTANT DES PROPRIETES ANTIREFLET**

VERFAHREN ZUR ANTIREFLEKTIONSBEHANDLUNG UND ANTIREFLEKTIVES MATERIAL

METHOD FOR ANTIGLARE TREATMENT AND MATERIAL HAVING ANTIGLARE PROPERTIES

(84) Etats contractants désignés:
**DE GB IT**

(30) Priorité:  **09.12.1997  FR 9715547**

(43) Date de publication de la demande:
**27.09.2000  Bulletin 2000/39**

(73) Titulaire: **COMMISSARIAT A L'ENERGIE ATOMIQUE**
**75015 Paris (FR)**

(72) Inventeur: **BELLEVILLE, Philippe**
**F-92400 Courbevoie (FR)**

(74) Mandataire: **Audier, Philippe André et al Brevalex,**
**3, rue du Docteur Lancereaux**
**75008 Paris (FR)**

(56) Documents cités:
**EP-A- 0 564 134       FR-A- 2 680 583**
**US-A- 4 363 852       US-A- 5 139 879**
**US-A- 5 449 558**

**Description**

Domaine technique

La présente invention se rapporte à un procédé de traitement antireflet d'un substrat organique ou inorganique, et à un matériau présentant des propriétés antireflet pouvant être obtenu par le procédé de l'invention.

Dans la suite de la description, le terme substrat organique désigne plus précisément un substrat plastique, par exemple l'un de ceux choisis parmi les polyacrylates, les polycarbonates, les polyallylcarbonates et les polyamides. Toutefois, cette liste n'est pas limitative et couvre de façon plus générale les matériaux polymères.

Le terme substrat inorganique couvre plus précisément un substrat vitreux, c'est-à-dire par exemple un matériau amorphe ou même cristallin et notamment un verre à base de silice tel qu'un verre silicate, un verre borosilicate, un verre sodocalcique, et un verre à base de phosphate, tel qu'un substrat fluorophosphate, et un substrat phosphate par exemple un cristal de dihydrogénophosphate de potassium ($KH_2PO_4$ ou KDP) deutérée ou non.

Le procédé de l'invention est particulièrement avantageux pour traiter un substrat sensible aux élévations de température tel qu'un substrat phosphate.

Les substrats phosphates, par exemple un cristal de dihydrogénophosphate de potassium, trouvent par exemple une application dans les domaines de l'amplification laser, de la conversion de fréquence laser ou dans la fabrication de cellules de Pockels.

Les substrats phosphates sont très sensibles aux chocs thermiques. Par exemple les cristaux de KDP deutérés subissent une transition de phase cristalline irréversible à une température d'autant plus basse qu'ils sont fortement deutérés. Le traitement antireflet de ces substrats doit par conséquent être réalisé à une température modérée, voire ambiante.

De plus, les substrats phosphates sont fragiles et craignent l'humidité de l'atmosphère. En effet, en présence d'humidité, ils s'hydrolysent en surface et s'opacifient, perdant ainsi leurs propriétés optiques. Ces substrats doivent en conséquence être protégés de l'humidité.

En résumé, le traitement antireflet qui permet d'augmenter la transmission optique, peut dans certains cas permettre d'augmenter la durée de vie du substrat par un effet de protection contre l'humidité, il doit par ailleurs être résistant à un flux laser lorsqu'il est destiné à des applications laser, et être réalisé à une température compatible avec la fragilité thermique du substrat.

L'invention se rapporte également à un matériau présentant des propriétés antireflet pouvant être obtenues par le procédé de l'invention, par exemple à un cristal biréfringent.

Etat de la technique

La demande de brevet FR-A-2 680 583 décrit un traitement antireflet de substrats organiques ou inorganiques. Ce traitement est un procédé de type sol-gel qui met en oeuvre une couche dense de résine alkylsilicone en tant que protecteur du substrat et un film poreux sol-gel en tant que couche antireflet, et qui comprend un traitement thermique à 150°C ou 180°C.

Ce procédé ne permet pas de traiter des substrats sensibles aux élévations de température. Aussi, un compromis est toujours nécessaire au détriment de la fonction de protection vis-à-vis de l'humidité, par exemple un dépôt sol-gel antireflet, sans couche silicone dans le cas de cristaux de KDP deutérés.

Exposé de l'invention

La présente invention a précisément pour but de fournir un procédé de traitement antireflet d'un substrat de phosphate permettant d'augmenter la transmission optique à travers ledit substrat et d'augmenter la durée de vie dudit substrat en le protégeant de l'humidité.

Le procédé de l'invention comprend une étape de dépôt d'une couche d'un polymère fluoré à bas indice de réfraction sur ledit substrat.

Selon l'invention, le dépôt de la couche de polymère fluoré peut être réalisé à partir d'une solution de dépôt comprenant le polymère fluoré et un solvant perfluoré par une technique qui peut être choisie parmi une technique par trempage-retrait, une technique par enduction centrifuge, ou une technique par enduction laminaire.

La technique par trempage-retrait consiste à immerger le substrat dans une solution de dépôt et à le retirer de cette solution pour le laisser sécher. La technique par enduction centrifuge consiste à déposer sur le substrat en rotation la solution de dépôt. La technique par enduction laminaire consiste à enduire horizontalement le substrat par capillarité à l'aide d'un tube contenant la solution de dépôt. Cette technique fait l'objet de la demande de brevet FR-A-2 693 558 assignée au CEA.

Le procédé peut être réalisé à température ambiante, et il peut être réalisé à pression atmosphérique.

La couche de polymère fluoré est déposée de préférence sous forme d'un film mince, uniformément réparti sur le substrat.

Le polymère fluoré préféré selon le procédé de l'invention est un polymère organofluoré présentant un bas indice de réfraction, inclus dans une plage de valeurs allant d'environ 1,2 à environ 1,4, de préférence d'environ 1,3 et de préférence soluble dans la plupart, des solvants perfluorés à température ambiante.

Le polymère organofluoré peut être par exemple un dérivé de polytétrafluoroéthylène, qui peut être à une concentration de 0,1 à 10% en poids dans la solution de dépôt. Ce polymère peut être par exemple un copolymère amorphe issu d'une copolymérisation d'un perfluoroalcène avec un perfluorodioxole. Un exemple d'un tel polymère est le copolymère de la marque TEFLON AF (marque déposée) issu de la copolymérisation d'un mélange de tétrafluoroéthylène (TFE) et de 2,2 bistrifluorométhyl 4,5-difluoro 1,3-dioxole (PDD). Le PDD empêche stériquement la cristallisation du copolymère formé. Suivant la teneur en PDD du mélange, les propriétés du copolymère résultant varient. Ainsi, lorsque la concentration en PDD augmente, la solubilité du copolymère diminue, l'indice dé réfraction du copolymère diminue et sa température de transition vitreuse augmente.

Le CYTOP (marque de commerce) est un autre exemple d'un polymère fluoré qui peut être utilisé dans le procédé de l'invention. Il est commercialisé par Asahi Glass Company et ses particularités sont une grande facilité d'utilisation en enduction, une bonne transparence dans le visible et l'ultraviolet, un bas indice de réfraction environ égal à 1,34 et une bonne résistance chimique et thermique. Sa composition chimique n'est pas divulguée.

Le solvant perfluoré peut être choisi dans le groupe comprenant un perfluoroalkylamine, par exemple le Fluorinert série FC (marque déposée) de la société 3M, un perfluoropolyéther, par exemple le Galden série HT ou DO (marque déposée) de la société Ausimont-Montedison, un fluoroalcane tel qu'un fréon, et le Flutec (marque déposée) de la société Rhône-Poulenc.

La solution de dépôt est préparée en mélangeant une quantité adéquate d'un polymère fluoré avec un solvant perfluoré pour obtenir une solution de dépôt présentant une viscosité permettant un dépôt uniforme et homogène à la surface du substrat.

Cette viscosité est fonction de la concentration en polymère fluoré dans la solution de dépôt. Aussi, selon le procédé de l'invention, lorsque le polymère fluoré est par exemple un dérivé du polytétrafluoroéthylène (PTFE) et le solvant perfluoré est un perfluoroalkylamine, celui-ci a de préférence une concentration de 0,5 à 10% en poids de polymère fluoré dans la solution de dépôt, de préférence encore de 0,5 à 6% en poids et de préférence encore de 2 à 6% en poids.

De préférence, la solution de dépôt est filtrée avant dépôt sur le substrat au moyen d'un filtre compatible avec la nature du solvant et du polymère fluoré, par exemple au moyen d'un filtre de polypropylène du type Whatman (marque déposée) de manière à supprimer des impuretés pouvant être en suspension dans cette solution et ainsi augmenter la qualité du traitement antireflet.

Selon le procédé de l'invention, la couche de polymère fluoré déposée sur le substrat peut être déposée en une couche unique, ou en plusieurs sous-couches, c'est-à-dire en une ou plusieurs applications successives.

La couche, ou film, de polymère fluoré peut être déposée en une couche dont l'épaisseur est fonction du domaine spectral d'utilisation et correspond de préférence à celle d'une couche optique quart d'onde.

Selon l'invention, lorsque le polymère fluoré a un indice de réfraction n et qu'il permet une transmission extremum de lumière à une longueur d'onde λ, la couche de polymère fluoré est déposée en une épaisseur $e = \frac{\lambda}{4n}$.

La couche de polymère fluoré déposée a de préférence une épaisseur incluse dans une plage de 50 à 300 nm pour le domaine ultraviolet-proche infrarouge, c'est-à-dire $260 \text{ nm} \leq \lambda \leq 1560$ notamment lorsque le polymère fluoré est un dérivé de polytétrafluoroéthylène.

Dans l'exemple du dérivé de polytétrafluoroéthylène, cette épaisseur est aisément déposée en une seule application compte tenu des concentrations des solutions utilisées.

Le procédé de la présente. invention est particulièrement intéressant pour un traitement antireflet d'un substrat sensible aux élévations de températures, par exemple pour un traitement antireflet d'un verre phosphate, ou d'un cristal de KDP deutéré ou non.

Afin d'améliorer l'adhérence de la couche antireflet sur le substrat, le procédé de l'invention peut comprendre en outre, avant l'étape de dépôt sur le substrat d'une couche de polymère fluoré à bas indice de réfraction, une préparation de la surface du substrat.

Cette préparation consiste en un nettoyage du substrat. Le nettoyage est réalisé à l'aide de solvants et produits classiquement utilisés pour le nettoyage et le rinçage de substrats en optique. Ces solvants et produits sont de préférence adaptés à la nature du substrat de manière à ne pas l'altérer.

Par exemple lorsque le substrat est un substrat phosphate hygroscopique, on peut utiliser un hydrocarbure issu de la distillation du pétrole en tant que solvant pour un nettoyage grossier et/ou un dégraissage. Ce solvant peut être par exemple du toluène ou du kérosène. Le substrat peut ensuite être rincé par un hydrocarbure alcoolique ou aromatique pour un nettoyage fin de la surface, puis par un solvant organochloré tel que du tétrachloréthylène.

Le matériau selon l'invention peut comprendre en outre une couche d'un agent de couplage entre la surface du substrat et la couche de polymère fluoré. Cette couche d'agent de couplage peut être celle décrite précédemment.

Lorsque le polymère fluoré a un indice de réfraction n et qu'il permet une transmission extremum de lumière à une longueur d'onde λ, la couche du polymère fluoré a une épaisseur de $e = \frac{\lambda}{4n}$.

L'indice de réfraction du polymère fluoré est de préférence inclus dans une plage de valeurs allant d'environ 1,2 à environ 1,4, de préférence cet indice de réfraction est d'environ 1,3.

La couche de polymère fluoré a de préférence une épaisseur incluse dans une plage de valeur allant de 50 à 300 nm pour le domaine ultraviolet proche infrarouge, c'est-à-dire notamment lorsque le polymère fluoré est un dérivé de polytétrafluoroéthylène 260 nm≤λ≤1560 nm.

De plus, lorsque le substrat est un cristal de dihydrogénophosphate de potassium deutéré ou non, le matériau selon l'invention constitue un cristal biréfringent qui peut être utilisé pour la fabrication d'une cellule de Pockels. L'utilisation de ce revêtement permet de simplifier considérablement le fonctionnement et la maintenance de la cellule de Pockels ainsi fabriquée, car une simple couche de polymère fluoré remplace les liquides d'indice et boîtiers classiquement utilisés pour de telles cellules.

En effet, la couche de polymère fluoré selon l'invention constitue une excellente protection du substrat contre l'humidité. Cette couche permet par exemple d'accroître de plusieurs mois l'utilisation du cristal de KDP deutéré ou non dans une cellule de Pockels par rapport à une cellule de Pockels de l'art antérieur.

Par ailleurs, la couche de polymère fluoré confère à la cellule de Pockels une transmission supérieure à 98%. Ceci constitue un gain de 6 à 7% par rapport à un cristal de KDP non traité, donc des pertes d'insertion faibles dans un amplificateur.

Un matériau selon l'invention convient en conséquence pour une utilisation en laser de puissance.

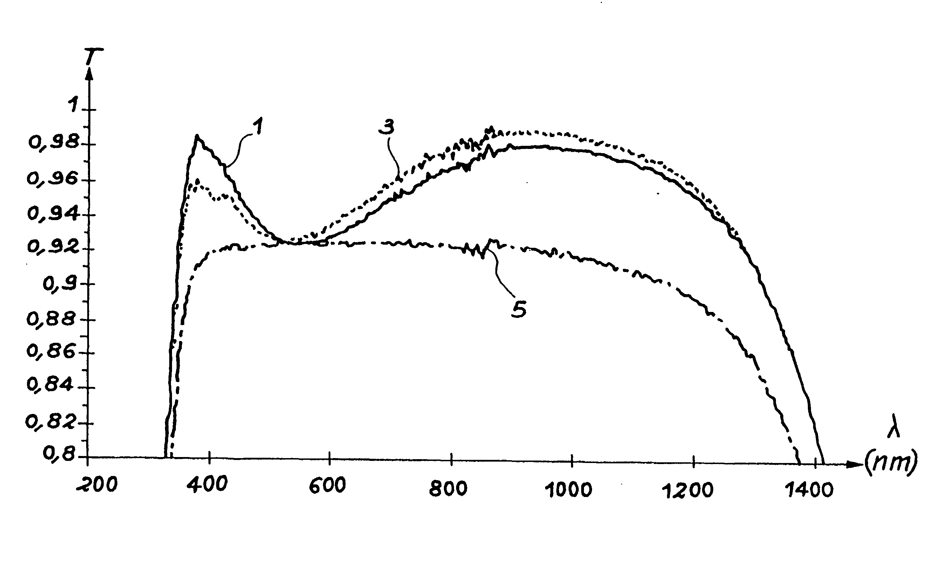

L'invention sera mieux comprise à la lecture suivante d'un mode de réalisation préférentiel donné à titre d'exemple illustratif et non limitatif, en référence à la figure unique en annexe.

Description de la figure

La figure unique est un graphique comparatif représentant les transmissions optiques d'un cristal de KDP nu, d'un cristal de KDP comportant une couche sol-gel poreuse et d'un cristal de KDP comportant une couche de polymère fluoré, en fonction de la longueur d'onde incidente en nm.

Exemples de réalisation de l'invention

Exemple de traitement antireflet d'un substrat phosphate par le procédé de l'invention

Dans cet exemple, un cristal de KDP est traité par le procédé de l'invention.

Avant dépôt du film antireflet, le cristal de KDP est nettoyé en l'immergeant dans un bain de kérosène puis de toluène. Ensuite, il est rincé au moyen de tétrachloréthylène puis essuyé à l'aide d'un papier optique doux.

Pour le traitement antireflet selon l'invention, le polymère fluoré utilisé est un copolymère dérivé de polytétrafluoroéthylène (PTFE) obtenu par polymérisation du 2,2-bistrifluorométhyl 4,5 difluoro 1,3-dioxole avec du tétrafluoroéthylène. Il est préparé à partir d'un produit commercialisé par la société Du Pont de Nemours sous la marque déposée TEFLON AF 1600.

Ce polymère fluoré est mis en solution à une concentration de 4% en poids dans un solvant perfluoré de la marque déposée FLUORINERT, série FC de la société 3M, pour former une solution de dépôt.

Cette solution de dépôt est filtrée avant emploi à l'aide de filtres de polypropylène de la société Whatman (marque déposée).

Le dépôt de la solution de dépôt sur le cristal de KDP est effectué par trempage-retrait en salle blanche classe 1000. Après dépôt, la couche de polymère fluoré est séchée à température ambiante et on obtient un matériau présentant des propriétés antireflet selon l'invention, constitué du cristal de KDP et de la couche de polymère fluoré.

La couche de polymère obtenue est dense et hydrophobe, et elle peut être essuyée sans subir d'endommagement. Elle présente l'avantage d'être résistante au pelage (test normalisé du ruban adhésif US-MIL-A-AA-113B).

Des mesures de transmission optique en fonction de la longueur d'onde en nm sont réalisées sur le cristal de KDP à la surface duquel est déposée une couche de polymère fluoré selon l'invention (KDP+polymère fluoré), et à dessein de comparaison, sur un cristal de KDP à la surface duquel est déposée une couche sol-gel selon l'art antérieur (KDP+sol-gel), et sur un cristal de KDP nu.

Les résultats de ces mesures ont été reportés sur la figure unique en annexe, la courbe 1 correspond aux mesures de transmission optique sur le cristal de KDP+polymère fluoré selon l'invention, la courbe 3 correspond aux mesures de transmission optique sur le cristal de KDP+sol-gel de l'art antérieur et la courbe 5 correspond aux mesures de transmission optique sur le cristal de KDP nu.

Utilisé comme revêtement antireflet sur substrats vitreux, ledit traitement permet d'en simplifier considérablement le nettoyage par son effet anti-salissures et anti-pluie, tout en garantissant une transmission optique maximum, supérieure ou égale à 99% soit un gain de 6 à 7% par rapport au substrat non traité.

De plus, le traitement selon l'invention fournit une couche antireflet présentant un caractère hydrophobe et oléophobe exceptionnel, avec un angle de contact supérieur à 90°.

**Revendications**

1. Procédé de traitement antireflet d'un substrat phosphate, **caractérisé en ce qu'**il comprend une étape de dépôt d'une couche antireflet constituée d'un polymère fluoré à bas indice de réfraction n sur ledit substrat, à partir d'une solution de dépôt comprenant ledit polymère fluoré, et **en ce que** la dite couche a une épaisseur e $= \frac{\lambda}{4n}$, λ étant la longueur d'onde pour laquelle la transmission de lumière est optimum.

**2.** Procédé selon la revendication 1, dans lequel le polymère fluoré est un dérivé de polytétrafluoroéthylène à une concentration de 0,1 à 10% en poids dans la solution de dépôt.

**3.** Procédé selon la revendication 1, dans lequel le polymère fluoré est un dérivé du polytétrafluororéthylène à une concentration de 2 à 5% en poids dans la solution de dépôt.

**4.** Procédé selon la revendication 2 ou 3, dans lequel, la solution de dépôt comprend un solvant perfluoré choisi dans le groupe comprenant un perfluoroalkylamine, un perfluoropolyéther, et un perfluoroalcane, et le dérivé de polytétrafluoroéthylène est choisi dans le groupe comprenant un polymère fluoré issu de la copolymérisation d'un mélange de tétrafluoroéthylène et de 2,2 bistrifluorométhyl 4,5-difluoro 1,3-dioxole.

**5.** Procédé selon l'une quelconque des revendications 1 à 4, dans lequel le substrat phosphate est choisi parmi un verre phosphate et un cristal de dihydrogénophosphate de potassium deutéré ou non.

**6.** Matériau présentant des propriétés antireflet comprenant un substrat phosphate et une couche antireflet constituée d'un polymère fluoré à bas n indice de réfraction n, ladite couche de polymère fluoré étant déposée à la surface dudit substrat et ayant une épaisseur e = $\frac{\lambda}{4n}$, λ étant la longueur d'onde pour laquelle la transmission de lumière est optimum.

**7.** Matériau selon la revendication 6 dans lequel la couche de polymère fluoré a une épaisseur qui correspond à celle d'une couche optique quart d'onde comprise entre 50 à 300 nm dans le domaine ultraviolet-proche infrarouge.

**8.** Matériau selon la revendication 7 ou 8 dans lequel l'indice de réfraction du polymère fluoré est d'environ 1,3.

**9.** Matériau selon l'une quelconque des revendications 6 à 9 dans lequel le polymère fluoré est un dérivé de polytétrafluoroéthylène.

**10.** Matériau selon l'une quelconque des revendications 6 à 9, dans lequel le polymère fluoré est un polymère fluoré issu de la copolymérisation d'un mélange de tétrafluoroéthylène et de 2,2 bistrifluorométhyl 4,5-difluoro 1,3 dioxole.

**11.** Matériau selon l'une quelconque des revendications 6 à 11, dans lequel le substrat phosphate est choisi parmi un verre phosphate et un cristal de dihydrogénophosphate de potassium deutéré ou non.

**12.** Cristal biréfringent comprenant un matériau selon la revendication 12.

**13.** Cellule de Pockels comprenant un matériau selon la revendication 12.

**Patentansprüche**

**1.** Verfahren zur Durchführung einer Entspiegelungsbehandlung (Antireflexbehandlung) bei einem Phosphat-Substrat, **dadurch gekennzeichnet, dass** es umfasst die Abscheidung einer Entspiegelungsschicht (Antireflexions-Schicht), bestehend aus einem fluorierten Polymer mit niedrigem Brechungsindex, auf dem genannten Substrat unter Verwendung einer Abscheidungslösung, die das genannte fluorierte Polymer enthält, wobei die genannte Schicht eine Dicke e = λ/4 n aufweist, worin λ für die Wellenlänge steht, für die die Lichtdurchlässigkeit optimal ist.

**2.** Verfahren nach Anspruch 1, worin das fluorierte Polymer ein Polytetrafluoroethylen-Derivat mit einer Konzentration von 0,1 bis 10 Gew.-% in der Abscheidungslösung ist.

**3.** Verfahren nach Anspruch 1, worin das fluorierte Polymer ein Polytetrafluoroethylen-Derivat mit einer Konzentration von 2 bis 5 Gew.-% in der Abscheidungslösung ist.

**4.** Verfahren nach Anspruch 2 oder 3, worin die Abscheidungslösung ein perfluoriertes Lösungsmittel, ausgewählt aus der Gruppe Perfloroalkylamin, Perfloropolyether und Perfluoroalkan, umfasst und das Polytetrafluoroethylen-Derivat ausgewählt ist aus der Gruppe, die umfasst ein fluoriertes Polymer, wie es bei der Copolymerisation einer Mischung von Tetrafluoroethylen und 2,2-Bistrifluoromethyl-4,5-difluoro-1,3-dioxol erhalten wird.

**5.** Verfahren nach einem der Ansprüche 1 bis 4, worin das Phosphat-Substrat ausgewählt wird aus einem Phosphatglas und einem Kristall aus deuteriertem oder nicht-deuteriertem Kaliumdihydrogenphosphat.

**6.** Material, das Entspiegelungs- bzw. Antireflex-Eigenschaften aufweist, das umfasst ein Phosphat-Substrat und eine Entspiegelungs- bzw. Antireflex-Schicht, bestehend aus einem fluorierten Polymer mit niedrigem Brechungsindex, wobei die Schicht aus dem fluorierten Polymer auf der Oberfläche des Substrats abgeschieden ist und eine Dicke e = λ/4 n hat, worin λ für die Wellenlänge steht, für welche die Lichtdurchlässigkeit optimal ist.

7. Material nach Anspruch 6, bei dem die Schicht aus dem fluorierten Polymer eine Dicke hat, die derjenigen einer optischen Viertelwellenlängen-Schicht zwischen 50 und 300 nm in dem ultravioletten bis nahen infraroten Bereich entspricht.

8. Material nach Anspruch 7 oder 8, worin der Brechungsindex des fluorierten Polymers etwa 1,3 beträgt.

9. Material nach einem der Ansprüche 6 bis 9, worin das fluorierte Polymer ein Polytetrafluoroethylen-Derivat ist.

10. Material nach einem der Ansprüche 6 bis 9, worin das fluorierte Polymer ein fluoriertes Polymer ist, das hergestellt wurde durch Copolymerisation einer Mischung von Tetrafluoroethylen und 2,2-Bistrifluromethyl-4,5-difluoro-1,3-dioxol.

11. Material nach einem der Ansprüche 6 bis 11, in dem das Phosphat-Substrat ausgewählt ist aus einem Phosphatglas und einem Kristall aus deuteriertem oder nicht-deuteriertem Kaliumdihydrogenphosphat.

12. Doppelbrechender Kristall, der ein Material nach Anspruch 12 umfasst.

13. Pockels-Zelle, die ein Material nach Anspruch 12 umfasst.

**Claims**

1. Method of antiglare treatment of a phosphate substrate, **characterized in that** it comprises a step of depositing an antiglare layer of a fluorinated polymer with a low refractive index n on said substrate, from a deposition solution including said fluorinated polymer and **in that** said layer has a thickness e = $\frac{\lambda}{4n}$, λ being the wavelength for which light transmission is optimum.

2. Method according to claim 1, in which the fluorinated polymer is a derivative of polytetrafluoroethylene at a concentration of from 0.1 to 10% by weight in the deposition solution.

3. Method according to claim 1, in which the fluorinated polymer is a derivative of polytetrafluoroethylene at a concentration of from 2 to 5% by weight in the deposition solution.

4. Method according to claim 2 or 3, in which, the deposition solution comprises a perfluorinated solvent chosen from the group comprising a perfluoroalkylamine, a perfluoro-polyether, and a perfluoro-alkane, and the derivative of polytetrafluoroethylene is chosen from the group comprising a fluorinated polymer arising from the copolymerization of a mixture of tetrafluoroethylene and 2,2-bistrifluoromethyl-4,5-difluoro-1,3-dioxole.

5. Method according to any one of claims 1 to 4, in which the phosphate substrate is chosen from among a phosphate glass and a crystal of potassium dihydrogen phosphate which may or may not be deuterated.

6. Material having antiglare properties comprising a phosphate substrate and an antiglare layer of fluorinated polymer with a low refractive index n, said layer of fluorinated polymer being deposited on the surface of said substrate and having a thickness e = $\frac{\lambda}{4n}$, λ being the wavelength for which the light transmission is optimum.

7. Material according to claim 6, in which the layer of fluorinated polymer has a thickness which corresponds to that of a quarter wave optical layer, between 50 to 300 nm in the ultraviolet-near infrared range.

8. Material according to claim 6 or 7, in which the refractive index of the fluorinated polymer is about 1.3.

9. Material according to any one of the claims 6 to 8, in which the fluorinated polymer is a derivative of polytetrafluoroethylene.

10. Material according to any one of the claims 6 to 9 in which the fluorinated polymer is a fluorinated polymer arising from the copolymerization of a mixture of tetrafluoroethylene and 2,2-bistrifluoromethyl-4,5-difluoro-1,3-dioxole.

11. Material according to any one of claims 6 to 10, in which the phosphate substrate is chosen from among a phosphate glass and a crystal of potassium dihydrogen phosphate which may or may not be deuterated.

12. Doubly refracting crystal comprising a material according to claim 11.

13. Pockels cell comprising a material according to claim 11.

EP 1 038 193 B1